# EUROPÄISCHE PATENTSCHRIFT

(11) **EP 3 135 534 B1**
(45) Veröffentlichungstag und Bekanntmachung des Hinweises auf die Patenterteilung: **21.08.2019**
(21) Anmeldenummer: 15182819.1
(22) Anmeldetag: 27.08.2015
(51) Int. Cl.: B60P 3/36, B60P 3/39, B60R 15/00

(54) **REISEMOBILVORRICHTUNG**
MOTORHOME DEVICE
DISPOSITIF DE CAMPING-CAR

(43) Veröffentlichungstag der Anmeldung: 01.03.2017
(73) Patentinhaber: Schuler, Karl-Heinz, 88255 Köpfingen über Baienfurt (DE)
(72) Erfinder: Schuler, Karl-Heinz, 88255 Köpfingen über Baienfurt (DE)
(74) Vertreter: Daub, Thomas

(56) Entgegenhaltungen:
- DE-U1- 9 214 041
- DE-U1- 9 306 756
- DE-U1-202004 003 388
- DE-U1-202005 013 228
- FR-A5- 2 186 049

## Beschreibung

### Stand der Technik

Die Erfindung betrifft eine Reisemobilvorrichtung nach dem Oberbegriff des Patentanspruchs 1. Die DE 93 06 756 U1 offenbart eine solche Reisemobilvorrichtung.

Es ist bereits eine Reisemobilvorrichtung mit einer Schlafeinheit und mit einer als Dusche ausgebildeten Sanitäreinheit vorgeschlagen worden. Die Schlafeinheit weist genau einen einzigen Zustand auf. Demnach existieren keine Unterschiede zwischen einem Nutzungszustand der Schlafeinheit und einem Lagerungszustand der Schlafeinheit. Die Schlafeinheit und die Sanitäreinheit sind beabstandet zueinander angeordnet. Ein minimaler Abstand zwischen der Schlafeinheit und der Sanitäreinheit beträgt mindestens 350 mm. Ein Bereich zwischen der Schlafeinheit und der Sanitäreinheit, dessen geringste Erstreckung dem minimalen Abstand zwischen der Schlafeinheit und der Sanitäreinheit entspricht, bildet einen gangbaren Weg zwischen einer ersten Seite der Schlafeinheit und einer zweiten Seite der Schlafeinheit. Entlang des gangbaren Wegs ist ein erster und gleichzeitig einziger Zugangsbereich der Sanitäreinheit angeordnet. Somit ist der erste Zugangsbereich der Sanitäreinheit mittels des gangbaren Wegs erreichbar.

Die Aufgabe der Erfindung besteht insbesondere darin, eine gattungsgemäße Vorrichtung mit verbesserten Eigenschaften hinsichtlich einer kompakten Ausgestaltung bereitzustellen. Die Aufgabe wird erfindungsgemäß durch die Merkmale des

Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Reisemobilvorrichtung, insbesondere von einer Wohnmobilvorrichtung, mit zumindest einer Schlafeinheit und mit zumindest einer Sanitäreinheit, welche zumindest einen ersten Zugangsbereich aufweist.

Es wird vorgeschlagen, dass die Sanitäreinheit zumindest einen zweiten Zugangsbereich aufweist, wobei der erste Zugangsbereich und der zweite Zugangsbereich räumlich voneinander getrennt sind. Unter einer "Reisemobilvorrichtung", insbesondere unter einer "Wohnmobilvorrichtung", soll insbesondere zumindest ein Teil, insbesondere eine Unterbaugruppe, eines Reisemobils, insbesondere eines Wohnmobils, verstanden werden, wobei insbesondere zusätzlich auch Zubehöreinheiten für das Reisemobil, insbesondere für das Wohnmobil, umfasst sein können. Insbesondere kann die Reisemobilvorrichtung, insbesondere die Wohnmobilvorrichtung, auch das gesamte Reisemobil, insbesondere das gesamte Wohnmobil, umfassen.

Unter einer "Schlafeinheit" soll insbesondere eine Einheit verstanden werden, welche in wenigstens einem Nutzungszustand der Schlafeinheit eine Liegefläche bereitstellt, auf der insbesondere ein Mensch vorzugsweise unter wenigstens im Wesentlichen normalen und/oder bequemen Bedingungen schlafen kann. Insbesondere weist die Schlafeinheit zumindest ein Schlafelement auf, welches insbesondere wenigstens zu einem Großteil aus einem gepolsterten und/oder weichen Material besteht und welches vorteilhaft die Liegefläche ausbildet. Beispielsweise könnte das Schlafelement eine Matratze und/oder ein Bett und/oder ein Doppelbett und/oder ein Hochbett und/oder ein Etagenbett sein. Unter einer "Sanitäreinheit" soll insbesondere eine Einheit verstanden werden, welche zu einer Hygiene und/oder zu einer Verbesserung einer Gesundheit und/oder zu einer Erhaltung einer Gesundheit insbesondere eines Menschen vorgesehen ist. Beispielsweise könnte die Sanitäreinheit zu einer Körperpflege und/oder zu einer Körperhygiene insbesondere eines Menschen vorteilhaft unter Verwendung zumindest eines Körperpflegeobjekts vorgesehen sein. Die Körperpflege könnte insbesondere eine Verhütung von Krankheiten und/oder eine Erhaltung der Gesundheit und/oder eine Förderung der Gesundheit und/oder eine Festigung der Gesundheit sein. Die Körperhygiene könnte insbesondere eine Reinigung eines insbesondere menschlichen Körpers und/oder eine Erledigung insbesondere menschlicher und/oder dringender Bedürfnisse, wie beispielsweise ein Toilettengang, sein. Beispielsweise könnte das Körperpflegeobjekt ein Fluid, wie beispielsweise Wasser, und/oder eine Reinigungssubstanz, wie beispielsweise Shampoo und/oder Seife, und/oder ein Papier, wie beispielsweise Klopapier, und/oder ein Stoff, wie beispielsweise ein Handtuch, sein.

Unter einem "Zugangsbereich" soll insbesondere ein plattenförmiger räumlicher Bereich verstanden werden, welcher insbesondere eine Höhe und eine Breite und eine, insbesondere unendlich dünne, Dicke aufweist und durch welchen insbesondere ein Mensch hindurchtritt, insbesondere um eine erste Seite der Schlafeinheit und/oder eine zweite Seite der Schlafeinheit und/oder die Sanitäreinheit und/oder die Sanitäreinheit zu erreichen. Der Zugangsbereich kann insbesondere gebogen und/oder gekrümmt sein. Beispielsweise könnte der Zugangsbereich bei Betrachtung in einer Draufsicht wenigstens im Wesentlichen kreisbogenförmig und/oder wenigstens im Wesentlichen ovalbogenförmig und/oder wenigstens im Wesentlichen eckig sein. Unter einer "Höhe" eines Objekts soll insbesondere in einer Fahrtposition auf ebenem Fahrtuntergrund eine Erstreckung des Objekts in einer Vertikalrichtung verstanden werden. Unter einer "Erstreckung" eines Objekts soll insbesondere ein maximaler Abstand zweier Punkte einer senkrechten Projektion des Objekts auf eine Ebene verstanden werden. Die Fahrtposition ist insbesondere eine Position eines die Reisemobilvorrichtung aufweisenden Reisemobils, in welcher das Reisemobil insbesondere zu einer Bewegung, insbesondere zu einer Fahrt, vorgesehen ist und in welcher insbesondere Räder in Kontakt mit einem Fahrtuntergrund sind. Insbesondere ist der Fahrtuntergrund insbesondere geteert und/oder asphaltiert und vorteilhaft eine Straße und/oder ein Parkplatz und/oder ein Verkehrsweg. Die Vertikalrichtung ist insbesondere senkrecht zu dem Fahrtuntergrund und/oder senkrecht zu einem Untergrund ausgerichtet. Der Untergrund ist insbesondere ein Boden und/oder ein Fußboden. Unter "horizontal" soll insbesondere eine Richtung verstanden werden, welche parallel zu einer von dem Untergrund aufgespannten Ebene und/oder parallel zu einer von dem Fahrtuntergrund aufgespannten Ebene ausgerichtet ist. Unter "vertikal" soll insbesondere eine Richtung verstanden werden, welche senkrecht zu einer von dem Untergrund aufgespannten Ebene und/oder senkrecht zu einer von dem Fahrtuntergrund aufgespannten Ebene ausgerichtet ist.

Insbesondere bildet der Zugangsbereich eine randseitige und/oder seitliche Begrenzung der Sanitäreinheit aus. Der Zugangsbereich weist insbesondere eine Haupterstreckungsebene auf, welche wenigstens im Wesentlichen und vorteilhaft vollständig senkrecht zu dem Untergrund ausgerichtet ist. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Der Zugangsbereich ist insbesondere zu einem Eintritt in die Sanitäreinheit und/oder zu einem Austritt aus der Sanitäreinheit vorgesehen. Insbesondere ist der Zugangsbereich an einer randseitigen und/oder seitlichen Begrenzung der Sanitäreinheit angeordnet.

Vorteilhaft weist die Sanitäreinheit zumindest ein Verschlusselement auf, welches dazu vorgesehen ist, in wenigstens einem Nutzungszustand der Sanitäreinheit einen Zugang durch zumindest einen ersten Zugangsbereich der Zugangsbereiche wenigstens zu einem Großteil, insbesondere wenigstens im Wesentlichen und vorteilhaft vollständig zu verhindern. Beispielsweise könnte das Verschlusselement eine Tür und/oder ein Vorhang und/oder eine Trennwand sein. Vorteilhaft ist das Verschlusselement zwischen einem ersten Zustand und einem zweiten Zustand beweglich, insbesondere schwenkbar und/oder verschiebbar, angeordnet. In dem ersten Zustand verhindert das Verschlusselement insbesondere einen Zugang durch zumindest einen ersten Zugangsbereich der Zugangsbereiche wenigstens zu einem Großteil, insbesondere wenigstens im Wesentlichen und vorteilhaft vollständig. Das Verschlusselement gibt in dem zweiten Zustand insbesondere einen Zugang durch zumindest einen ersten Zugangsbereich der Zugangsbereiche wenigstens zu einem Großteil, insbesondere wenigstens im Wesentlichen und vorteilhaft vollständig frei.

Der erste Zugangsbereich der Sanitäreinheit und der zweite Zugangsbereich der Sanitäreinheit sind insbesondere beabstandet zueinander angeordnet. Insbesondere weisen der erste Zugangsbereich und der zweite Zugangsbereich einen minimalen Abstand, insbesondere zwischen dem ersten Zugangsbereich und dem zweiten Zugangsbereich, von mindestens 50 mm, insbesondere von mindestens 60 mm, vorteilhaft von mindestens 70 mm, besonders vorteilhaft von mindestens 80 mm, vorzugsweise von mindestens 90 mm und besonders bevorzugt von mindestens 95 mm auf. Unter einem "Nutzungszustand" eines Objekts soll insbesondere ein funktionstüchtiger Zustand verstanden werden, in welchem das Objekt insbesondere zu einer Erfüllung seiner ordnungsgemäßen Funktion verwendbar und/oder benutzbar ist. Insbesondere ist die Schlafeinheit in dem Nutzungszustand der Schlafeinheit zu einer Bereitstellung einer Liegefläche vorgesehen. In dem Nutzungszustand der Schlafeinheit kann insbesondere ein Mensch vorzugsweise unter wenigstens im Wesentlichen normalen und/oder bequemen Bedingungen schlafen. Die Schlafeinheit weist in dem Nutzungszustand der Schlafeinheit insbesondere eine maximale Längserstreckung und/oder eine maximale Quererstreckung auf.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch die erfindungsgemäße Ausgestaltung kann insbesondere eine kompakte Ausgestaltung erreicht werden. Insbesondere kann eine geringe Fahrzeuglänge eines die Reisemobilvorrichtung aufweisenden Reisemobils und/oder ein geringer Wendekreis und/oder ein geringer Spurkreis erzielt werden. Durch die geringe Fahrzeuglänge kann insbesondere ein geringer Materialbedarf bei einer Fertigung des die Reisemobilvorrichtung aufweisenden Reisemobils und/oder ein geringer Spritverbrauch des die Reisemobilvorrichtung aufweisenden Reisemobils ermöglicht werden.

Erfindungsgemäß wird vorgeschlagen, dass in wenigstens einem Nutzungszustand der Schlafeinheit der erste Zugangsbereich einen Zugang zu einer ersten Seite der Schlafeinheit und der zweite Zugangsbereich einen Zugang zu einer zweiten Seite der Schlafeinheit bereitstellt. Unter einer "Seite" der Schlafeinheit soll insbesondere eine randseitige und/oder seitliche Begrenzung der Schlafeinheit insbesondere in Bezug auf eine Längserstreckung und/oder auf eine Quererstreckung einer Karosserie insbesondere der Reisemobilvorrichtung verstanden werden. Unter einer "Längserstreckung" eines Objekts soll insbesondere eine Länge einer längsten Seite eines kleinsten gedachten geometrischen Quaders verstanden werden, welcher das Objekt gerade noch vollständig umschließt. Unter einer "Quererstreckung" eines Objekts soll insbesondere eine Länge einer zweitlängsten Seite eines kleinsten gedachten geometrischen Quaders verstanden werden, welcher das Objekt gerade noch vollständig umschließt. Dadurch kann insbesondere eine besonders kompakte Ausgestaltung erreicht werden.

Ferner wird vorgeschlagen, dass der erste Zugangsbereich und der zweite Zugangsbereich in dem Nutzungszustand der Schlafeinheit Enden einer in der Sanitäreinheit angeordneten Durchgangspassage von der ersten Seite der Schlafeinheit zu der zweiten Seite der Schlafeinheit und insbesondere von der zweiten Seite der Schlafeinheit zu der ersten Seite der Schlafeinheit ausbilden. Unter einer "Durchgangspassage" soll insbesondere ein räumlicher Bereich verstanden werden, der in dem Nutzungszustand der Schlafeinheit die zwei Seiten der Schlafeinheit miteinander verbindet und der insbesondere zumindest einen Weg zwischen den Seiten der Schlafeinheit ausbildet. Vorteilhaft bildet die Durchgangspassage den einzigen insbesondere gangbaren Weg zwischen den Seiten der Schlafeinheit aus. Der gangbare Weg ist insbesondere ein Weg unter Vermeidung einer Überquerung und/oder Durchquerung der Schlafeinheit. Insbesondere ist der gangbare Weg ein Weg auf einem Untergrund, insbesondere auf einem Boden und/oder Fußboden, eines Reisemobilinnenraums. Die Enden der Durchgangspassage sind insbesondere identisch mit dem ersten Zugangsbereich der Sanitäreinheit und mit dem zweiten Zugangsbereich der Sanitäreinheit. Ein von der Sanitäreinheit eingenommener Raum entspricht insbesondere einem von der Durchgangspassage eingenommenen Raum. Insbesondere bildet die Sanitäreinheit die Durchgangspassage aus. Dadurch kann insbesondere auf eine zwischen der Schlafeinheit und der Sanitäreinheit angeordnete Durchgangspassage verzichtet werden.

Zudem wird vorgeschlagen, dass der erste Zugangsbereich und der zweite Zugangsbereich einen minimalen Abstand von mindestens 100 mm, insbesondere von mindestens 125 mm, vorteilhaft von mindestens 150 mm und vorzugsweise von mindestens 175 mm aufweisen und von einem Zwischenbereich getrennt sind, welcher die Sanitäreinheit begrenzt. Der Zwischenbereich ist insbesondere an einer seitlichen Begrenzung der Sanitäreinheit angeordnet und insbesondere von der Durchgangspassage verschieden. Insbesondere ist der Zwischenbereich ein plattenförmiger räumlicher Bereich, welcher insbesondere eine Höhe und eine Breite und eine Dicke aufweist, die einen Betrag von maximal 25 mm, insbesondere von maximal 20 mm, vorteilhaft von maximal 15 mm und vorzugsweise von maximal 12 mm annimmt. Der Zwischenbereich bildet insbesondere eine randseitige und/oder seitliche Begrenzung der Sanitäreinheit aus. Der Zwischenbereich kann insbesondere gebogen und/oder gekrümmt sein. Beispielsweise könnte der Zwischenbereich bei Betrachtung in einer Draufsicht eine wenigstens im Wesentlichen kreisbogenförmig und/oder wenigstens im Wesentlichen ovalbogenförmig und/oder wenigstens im Wesentlichen eckig sein. Dadurch können die Zugangsbereiche insbesondere voneinander beabstandet und/oder ein komfortabler Durchgang durch die Sanitäreinheit ermöglicht werden.

Beispielsweise könnte der Zwischenbereich eine unendlich dünne Dicke aufweisen und insbesondere frei von Elementen und/oder Objekten und/oder Einheiten sein. Vorzugsweise weist die Sanitäreinheit wenigstens eine Begrenzungswand auf, die in dem Zwischenbereich angeordnet ist. Dadurch kann insbesondere eine geschützte Anordnung der Sanitäreinheit, insbesondere in wenigstens einem Nutzungszustand der Sanitäreinheit, erreicht werden.

Ferner wird vorgeschlagen, dass die Schlafeinheit und die Sanitäreinheit in wenigstens einem Nutzungszustand der Schlafeinheit einen minimalen Abstand von maximal 200 mm, insbesondere von maximal 150 mm, vorteilhaft von maximal 100 mm, besonders vorteilhaft von maximal 50 mm und vorzugsweise von maximal 25 mm aufweisen. Dadurch kann insbesondere ein zur Verfügung stehender Raum optimal ausgenutzt werden.

Beispielsweise könnten der erste Zugangsbereich und der zweite Zugangsbereich wenigstens im Wesentlichen parallel zueinander angeordnet sein. Vorteilhaft sind der erste Zugangsbereich und der zweite Zugangsbereich zumindest im Wesentlichen senkrecht zueinander angeordnet. Insbesondere weist der erste Zugangsbereich eine erste Haupterstreckungsebene auf. Insbesondere weist der zweite Zugangsbereich eine zweite Haupterstreckungsebene auf. Die erste Haupterstreckungsebene des ersten Zugangsbereichs und die zweite Haupterstreckungsebene des zweiten Zugangsbereichs sind insbesondere wenigstens im Wesentlichen senkrecht zueinander angeordnet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere ist die Durchgangspassage insbesondere wenigstens im Wesentlichen gebogen und/oder gekrümmt. Dadurch kann die Sanitäreinheit insbesondere besonders platzsparend in einem Eckbereich eines Reisemobilinnenraums des die Reisemobilvorrichtung aufweisenden Reisemobils angeordnet werden.

Beispielsweise könnte die Sanitäreinheit zumindest ein Waschbecken und/oder zumindest eine Toilette aufweisen. Alternativ oder zusätzlich könnte die Sanitäreinheit als zumindest ein Waschbecken und/oder als zumindest eine Toilette ausgebildet sein. Vorteilhaft weist die Sanitäreinheit zumindest eine Dusche auf. Insbesondere ist die Sanitäreinheit als eine Wascheinheit ausgebildet und vorteilhaft zu einer Verwendung insbesondere durch einen Menschen zu einem Waschen, insbesondere zumindest eines Körperteils des Menschen, vorgesehen. Beispielsweise könnte die Sanitäreinheit als zumindest ein Waschbecken und/oder als zumindest eine Dusche ausgebildet sein. Dadurch kann insbesondere ein hoher Komfort für einen Bediener bereitgestellt werden.

Ferner wird vorgeschlagen, dass die Schlafeinheit von wenigstens einem Nutzungszustand der Schlafeinheit in wenigstens einem Lagerungszustand der Schlafeinheit und von dem Lagerungszustand der Schlafeinheit in den Nutzungszustand der Schlafeinheit überführbar ist, wobei die Schlafeinheit in dem Lagerungszustand der Schlafeinheit eine geringere Erstreckung entlang zumindest einer Richtung aufweist als in dem Nutzungszustand der Schlafeinheit. Die Schlafeinheit ist vorteilhaft mehrteilig ausgebildet und weist insbesondere eine variable Erstreckung, insbesondere eine variable Längserstreckung und/oder eine variable Quererstreckung, auf. Die Schlafeinheit weist insbesondere zumindest ein erstes Schlafelement und zumindest ein zweites Schlafelement auf, welche insbesondere relativ zueinander beweglich, insbesondere verschiebbar und/oder klappbar und/oder drehbar und/oder schwenkbar, angeordnet sind. Beispielsweise könnten das erste Schlafelement und das zweite Schlafelement teleskopartig angeordnet sein. Das zweite Schlafelement könnte insbesondere dazu vorgesehen sein, das erste Schlafelement in dem Lagerungszustand der Schlafeinheit wenigstens teilweise, vorteilhaft wenigstens zu einem Großteil und vorzugsweise vollständig aufzunehmen. Alternativ oder zusätzlich könnte das erste Schlafelement von einer horizontalen Position in dem Nutzungszustand der Schlafeinheit in eine vertikale Position in dem Lagerungszustand der Schlafeinheit und von einer vertikalen Position in dem Lagerungszustand der Schlafeinheit in eine horizontale Position in dem Nutzungszustand der Schlafeinheit überführbar sein. Hierbei könnte das zweite Schlafelement von einer ersten horizontalen Position in dem Nutzungszustand der Schlafeinheit in eine zweite horizontale Position in dem Lagerungszustand der Schlafeinheit und von einer zweiten horizontalen Position in dem Lagerungszustand der Schlafeinheit in eine erste horizontale Position in dem Nutzungszustand der Schlafeinheit überführbar sein. In dem Lagerungszustand der Schlafeinheit könnte die Schlafeinheit insbesondere eine Couch und/oder ein Sofa sein. Hierbei könnte insbesondere das erste Schlafelement eine Rückenlehne und das zweite Schlafelement eine Sitzfläche bereitstellen und/oder ausbilden. Dadurch kann insbesondere eine kompakte Ausgestaltung erreicht werden.

Die Richtung, entlang welcher die Schlafeinheit in dem Lagerungszustand der Schlafeinheit eine geringere Erstreckung aufweist als in dem Nutzungszustand der Schlafeinheit, könnte insbesondere eine Querrichtung der Schlafeinheit in dem Nutzungszustand der Schlafeinheit sein. Vorteilhaft ist die Richtung, entlang welcher die Schlafeinheit in dem Lagerungszustand der Schlafeinheit eine geringere Erstreckung aufweist als in dem Nutzungszustand der Schlafeinheit, eine Längsrichtung der Schlafeinheit in dem Nutzungszustand der Schlafeinheit. Die Längsrichtung der Schlafeinheit in dem Nutzungszustand der Schlafeinheit ist insbesondere parallel zu einer Längserstreckung der Schlafeinheit in dem Nutzungszustand der Schlafeinheit. Die Querrichtung der Schlafeinheit in dem Nutzungszustand der Schlafeinheit ist insbesondere parallel zu einer Quererstreckung der Schlafeinheit in dem Nutzungszustand der Schlafeinheit. Insbesondere weist die Schlafeinheit in dem Lagerungszustand der Schlafeinheit eine Längserstreckung von maximal 1800 mm, insbesondere von maximal 1795 mm, vorteilhaft von maximal 1790 mm und vorzugsweise von maximal 1785 mm auf. Die Schlafeinheit weist in dem Nutzungszustand der Schlafeinheit insbesondere eine Längserstreckung von mindestens 1910 mm, insbesondere von mindestens 1915 mm, vorteilhaft von mindestens 1920 mm, besonders vorteilhaft von mindestens 1930 mm und vorzugsweise von mindestens 1950 mm auf. Dadurch kann insbesondere eine flexible Ausgestaltung erreicht werden.

Weiterhin wird vorgeschlagen, dass die Reisemobilvorrichtung zumindest eine Karosserierückwand aufweist, von welcher die Sanitäreinheit einen minimalen Abstand von maximal 1750 mm, insbesondere von maximal 1740 mm, vorteilhaft von maximal 1730 mm und vorzugsweise von maximal 1725 mm aufweist. Die Karosserierückwand bildet insbesondere eine rückwärtige Begrenzung eines Reisemobilinnenraums und/oder Reisemobilwohnraums aus. Insbesondere ist die Karosserierückwand in einer Fahrtposition wenigstens im Wesentlichen parallel zu einem Fahrtuntergrund ausgerichtet. Die Reisemobilvorrichtung weist insbesondere eine Karosserie auf, welche die Karosserierückwand insbesondere wenigstens zu einem Großteil, insbesondere wenigstens im Wesentlichen und vorteilhaft vollständig ausbildet. Die Schlafeinheit weist in dem Nutzungszustand der Schlafeinheit insbesondere einen minimalen Abstand zu der Karosserierückwand von mindestens 1900 mm, insbesondere von mindestens 1905 mm, vorteilhaft von mindestens 1910 mm und vorzugsweise von mindestens 1915 mm auf, wodurch insbesondere eine hohe Bequemlichkeit und/oder eine gute Schlafqualität für einen Bediener ermöglicht werden kann. Dadurch kann insbesondere eine kompakte Ausgestaltung erzielt werden.

Ferner wird vorgeschlagen, dass die Reisemobilvorrichtung zumindest eine Karosserie aufweist, welche eine Längserstreckung von maximal 7050 mm, insbesondere von maximal 7030 mm, vorteilhaft von maximal 7010 mm und vorzugsweise von maximal 6990 mm aufweist. Die Karosserie ist insbesondere eine gesamte Außenhülle eines die Reisemobilvorrichtung aufweisenden Reisemobils. Insbesondere definiert, vorteilhaft umgibt, die Karosserie zumindest einen Reisemobilinnenraum und/oder zumindest einen Reisemobilwohnraum. Dadurch kann insbesondere eine geringe Fahrzeuglänge eines die Reisemobilvorrichtung aufweisenden Reisemobils erzielt werden, wodurch insbesondere ein geringer Wendekreis und/oder ein geringer Spurkreis erreicht werden kann.

Eine besonders kompakte Ausgestaltung kann insbesondere erreicht werden durch ein Reisemobil, insbesondere durch ein Wohnmobil, mit einer erfindungsgemäßen Reisemobilvorrichtung, insbesondere mit einer Wohnmobilvorrichtung.

Die Reisemobilvorrichtung soll hierbei nicht auf die oben beschriebene Anwendung und Ausführungsform beschränkt sein. Insbesondere kann die Reisemobilvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Reisemobil mit einer Reisemobilvorrichtung in einer schematischen Seitenansicht,
- Fig. 2: einen Ausschnitt der Reisemobilvorrichtung in einer schematischen Draufsicht und
- Fig. 3: einen Ausschnitt einer Reisemobilvorrichtung eines alternativen Reisemobils in einer schematischen Draufsicht.

### Beschreibung der Ausführungsbeispiele

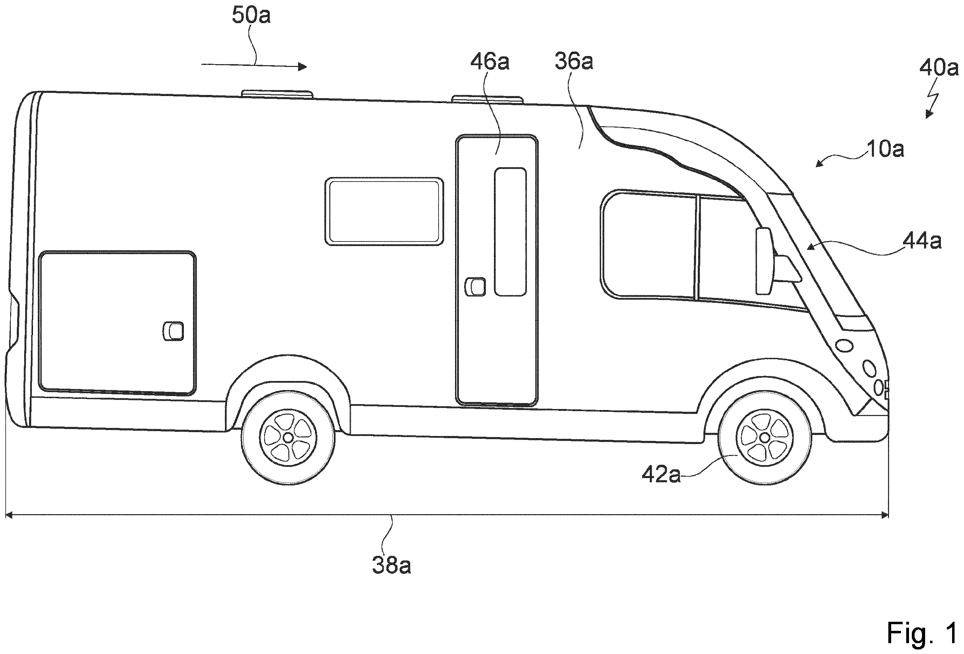

Fig. 1 zeigt ein Reisemobil 40a, das als ein Wohnmobil ausgebildet ist, mit einer Reisemobilvorrichtung 10a, die als eine Wohnmobilvorrichtung ausgebildet ist.

Das Reisemobil 40a weist vier Räder 42a zu einer Bewegung auf einem Fahrtuntergrund auf. Von mehrfach vorhandenen Objekten ist in den Figuren jeweils lediglich eines mit einem Bezugszeichen versehen. In einer alternativen Ausgestaltung könnte das Reisemobil sechs Räder zu einer Bewegung auf einem Fahrtuntergrund aufweisen. Die Räder 42a sind in einer Fahrtposition in einem Kontakt mit dem Fahrtuntergrund angeordnet. In der Fahrtposition übertragen die Räder 42a eine Gewichtskraft des Reisemobils 40a auf den Fahrtuntergrund.

Die Reisemobilvorrichtung 10a weist eine Karosserie 36a auf. Die Karosserie 36a ist eine gesamte Außenhülle. In der Fahrtposition tragen die Räder 42a die Karosserie 36a. Die Karosserie 36a weist eine Längserstreckung 38a von im Wesentlichen 6990 mm auf.

Die Reisemobilvorrichtung 10a weist eine Bewegungssteuerungseinheit 44a zu einer Bewegung des Reisemobils 40a und/oder zu einer Lenkung des Reisemobils 40a auf. Die Bewegungssteuerungseinheit 44a ist von der Karosserie 36a umschlossen. Die Bewegungssteuerungseinheit 44a ist bezüglich einer Fahrtrichtung 50a in einem vorderen Bereich der Karosserie 36a angeordnet.

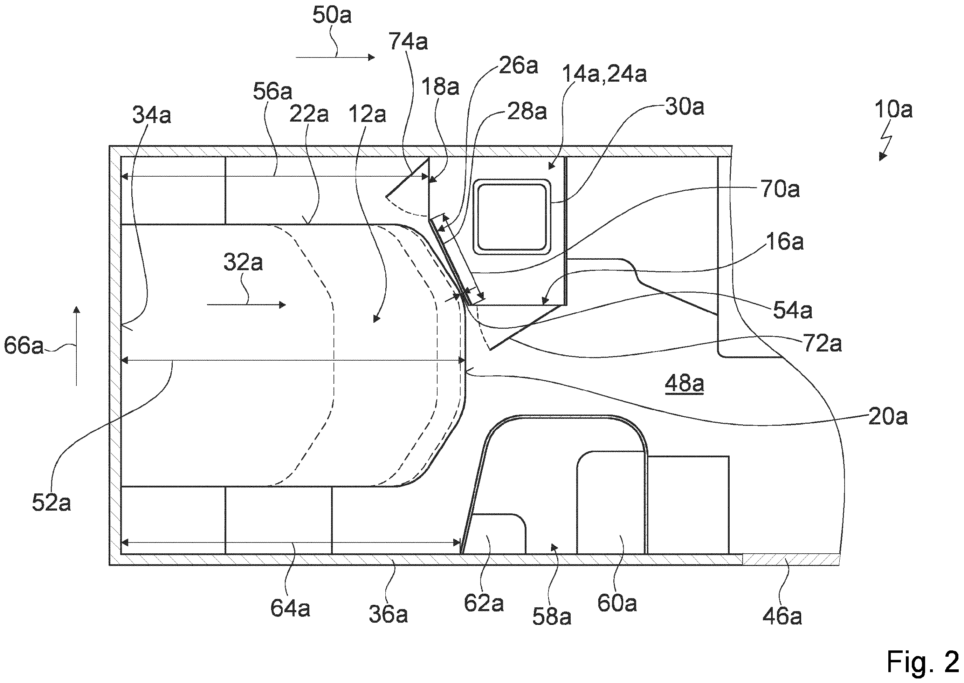

Die Karosserie umgibt, insbesondere umschließt, einen Reisemobilinnenraum 48a (vgl. Fig. 2). Die Reisemobilvorrichtung 10a weist eine Innenraumtüre 46a auf (vgl. Fig. 1). Die Innenraumtüre 46a ermöglicht einen Zugang zu dem Reisemobilinnenraum 48a (vgl. Fig. 2). Der Reisemobilinnenraum 48a grenzt an die Bewegungssteuerungseinheit 44a an. In Fahrtrichtung 50a betrachtet ist der Reisemobilinnenraum 48a hinten angeordnet. Der Reisemobilinnenraum 48a ist ein Reisemobilwohnraum.

Die Reisemobilvorrichtung 10a weist eine Schlafeinheit 12a auf (vgl. Fig. 2). Die Schlafeinheit 12a ist an einem einer Karosserierückwand 34a zugewandten Bereich des Reisemobilinnenraums 48a angeordnet. In einem montierten Zustand grenzt die Schlafeinheit 12a an die Karosserierückwand 34a an. Die Schlafeinheit 12a weist ein Bett auf. Im vorliegenden Ausführungsbeispiel ist die Schlafeinheit 12a als ein Bett ausgebildet.

Die Reisemobilvorrichtung 10a weist die Karosserierückwand 34a auf (vgl. Fig. 2). Die Karosserierückwand 34a bildet eine randseitige, seitliche Begrenzung des Reisemobilinnenraums 48a. Die Karosserierückwand 34 ist von der Karosserie 36a gebildet.

Die Reisemobilvorrichtung 10a weist eine Sanitäreinheit 14a auf (vgl. Fig. 2). Die Sanitäreinheit 14a weist einen ersten Zugangsbereich 16a auf. Der erste Zugangsbereich 16a ist zu einem Eintritt und/oder zu einem Austritt aus der Sanitäreinheit 14a vorgesehen. Der erste Zugangsbereich 16a ist in einem Bereich einer randseitigen, seitlichen Begrenzung der Sanitäreinheit 14a angeordnet. Die Sanitäreinheit 14a weist eine Dusche 30a auf.

Die Sanitäreinheit 14a weist einen zweiten Zugangsbereich 18a auf. Der zweite Zugangsbereich 18a ist zu einem Eintritt und/oder zu einem Austritt aus der Sanitäreinheit 14a vorgesehen. Der zweite Zugangsbereich 18a ist in einem Bereich einer randseitigen, seitlichen Begrenzung der Sanitäreinheit 14a angeordnet.

Der erste Zugangsbereich 16a und der zweite Zugangsbereich 18a sind räumlich voneinander getrennt. Der erste Zugangsbereich 16a und der zweite Zugangsbereich 18a sind zueinander beabstandet angeordnet. Im vorliegenden Ausführungsbeispiel weisen der erste Zugangsbereich 16a und der zweite Zugangsbereich 18a einen minimalen Abstand 70a von im Wesentlichen 192 mm auf. Der erste Zugangsbereich 16a und der zweite Zugangsbereich 18a sind von einem Zwischenbereich 26a getrennt. Der Zwischenbereich 26a ist in einem Bereich einer randseitigen, seitlichen Begrenzung der Sanitäreinheit 14a angeordnet. Im vorliegenden Ausführungsbeispiel weist die Sanitäreinheit 14a eine Begrenzungswand 28a auf. Die Begrenzungswand 28a ist in dem Zwischenbereich 26a angeordnet.

Die Sanitäreinheit 14a weist ein erstes Verschlusselement 72a auf. Das erste Verschlusselement 72a ist in dem ersten Zugangsbereich 16a angeordnet. In dem Nutzungszustand der Sanitäreinheit 14a verhindert das erste Verschlusselement 72a einen Zugang durch den ersten Zugangsbereich 16a im Wesentlichen. Das erste Verschlusselement ist eine Tür.

Die Sanitäreinheit 14a weist ein zweites Verschlusselement 74a auf. Das zweite Verschlusselement 74a ist in dem zweiten Zugangsbereich 18a angeordnet. In dem Nutzungszustand der Sanitäreinheit 14a verhindert das zweite Verschlusselement 74a einen Zugang durch den zweiten Zugangsbereich 18a im Wesentlichen. Das zweite Verschlusselement ist eine Tür.

Alternativ könnte die Sanitäreinheit insbesondere ein einziges Verschlusselement aufweisen, welches insbesondere dazu vorgesehen sein könnte, in wenigstens einem Nutzungszustand der Sanitäreinheit einen Zugang zu der Sanitäreinheit wenigstens im Wesentlichen zu verhindern. Beispielsweise könnte das Verschlusselement eine insbesondere mehrteilige und vorteilhaft zweiteilige Tür sein. Das Verschlusselement könnte insbesondere beweglich und vorteilhaft verschiebbar angeordnet sein.

Der erste Zugangsbereich 16a und der zweite Zugangsbereich 18a sind im Wesentlichen senkrecht zueinander angeordnet. Eine erste Haupterstreckungsebene des ersten Zugangsbereichs 16a ist im Wesentlichen parallel zu der Fahrtrichtung 50a ausgerichtet. Eine zweite Haupterstreckungsebene des zweiten Zugangsbereichs 18a ist im Wesentlichen senkrecht zu der Fahrtrichtung 50a ausgerichtet.

Der Zwischenbereich 26a ist schräg relativ zu dem ersten Zugangsbereich 16a angeordnet. Der Zwischenbereich 26a ist schräg relativ zu dem zweiten Zugangsbereich 18a angeordnet. Eine erste Haupterstreckungsebene des Zwischenbereichs 26a ist schräg relativ zu der Fahrtrichtung 50a ausgerichtet.

In einem Nutzungszustand der Schlafeinheit 12a stellt der erste Zugangsbereich 16a einen Zugang zu einer ersten Seite 20a der Schlafeinheit 12 bereit. Der zweite Zugangsbereich 18a stellt in dem Nutzungszustand der Schlafeinheit 12a einen Zugang zu einer zweiten Seite 22a der Schlafeinheit 12 bereit. Im vorliegenden Ausführungsbeispiel ist die erste Seite 20a der Schlafeinheit 12a in dem Nutzungszustand der Schlafeinheit 12a der Karosserierückwand 34a abgewandt. Die Karosserierückwand 34a und die erste Seite 20a der Schlafeinheit 12a sind in dem Nutzungszustand der Schlafeinheit 12a an einander gegenüberliegenden Enden der Schlafeinheit 12a angeordnet.

Eine Haupterstreckungsebene der ersten Seite 20a der Schlafeinheit 12a ist im Wesentlichen parallel zu einer Haupterstreckungsebene der Karosserierückwand 34a ausgerichtet. Eine Haupterstreckungsebene der zweiten Seite 22a der Schlafeinheit 12a ist im Wesentlichen senkrecht zu einer Haupterstreckungsebene der Karosserierückwand 34a ausgerichtet.

Ein gangbarer Weg zwischen einem Zugang zu der ersten Seite 20a der Schlafeinheit 12a und einem Zugang zu der zweiten Seite 22a der Schlafeinheit 12a führt in dem Nutzungszustand der Schlafeinheit 12a durch die Sanitäreinheit 14a. Die Sanitäreinheit 14a trennt in dem Nutzungszustand der Schlafeinheit 12a einen Zugang zu der ersten Seite 20a der Schlafeinheit 12a und einen Zugang zu der zweiten Seite 22a der Schlafeinheit 12a voneinander. Der erste Zugangsbereich 16a und der zweite Zugangsbereich 18a bilden in dem Nutzungszustand der Schlafeinheit 12a Enden einer in der Sanitäreinheit 14a angeordneten Durchgangspassage 24a von der ersten Seite 20a der Schlafeinheit 12a zu der zweiten Seite 22a der Schlafeinheit 12a aus. Die Durchgangspassage 24a ist von der Sanitäreinheit 14a gebildet.

In dem Nutzungszustand der Schlafeinheit 12a weisen die Schlafeinheit 12a und die Sanitäreinheit 14a einen minimalen Abstand 56a von im Wesentlichen 15 mm auf. Die Schlafeinheit 12a und die Sanitäreinheit 14a grenzen in dem Nutzungszustand der Schlafeinheit 12a aneinander an. Der minimale Abstand 56a zwischen der Schlafeinheit 12a und der Sanitäreinheit 14a ist zwischen einem der Karosserierückwand 34a abgewandten Bereich der Schlafeinheit 12a und dem Zwischenbereich 26a gemessen.

Die Schlafeinheit 12a ist von dem Nutzungszustand der Schlafeinheit 12a in einem Lagerungszustand der Schlafeinheit 12a und von dem Lagerungszustand der Schlafeinheit 12a in den Nutzungszustand der Schlafeinheit 12a überführbar. In dem Lagerungszustand der Schlafeinheit 12a weist die Schlafeinheit 12a eine geringere Erstreckung entlang einer Richtung 32a auf als in dem Nutzungszustand der Schlafeinheit 12a.

Die Richtung 32a, entlang welcher die Schlafeinheit 12a in dem Lagerungszustand der Schlafeinheit 12a eine geringere Erstreckung aufweist als in dem Nutzungszustand der Schlafeinheit 12a, ist im Wesentlichen parallel zu der Fahrtrichtung 50a. Die Richtung 32a, entlang welcher die Schlafeinheit 12a in dem Lagerungszustand der Schlafeinheit 12a eine geringere Erstreckung aufweist als in dem Nutzungszustand der Schlafeinheit 12a, ist eine Längsrichtung der Schlafeinheit 12a im dem Nutzungszustand der Schlafeinheit 12a. Die Schlafeinheit 12a ist ausgehend von dem Nutzungszustand der Schlafeinheit 12a in einer auf die Karosserierückwand 34a hinweisenden Bewegungsrichtung bewegbar.

Die Schlafeinheit 12a weist eine variable Längserstreckung auf. In dem Nutzungszustand der Schlafeinheit 12a weist die Schlafeinheit 12a eine maximale Längserstreckung 52a auf. Die maximale Längserstreckung 52a der Schlafeinheit 12a beträgt im Wesentlichen 1915 mm. Eine minimale Längserstreckung der Schlafeinheit 12a in dem Lagerungszustand der Schlafeinheit 12a ist kleiner als die maximale Längserstreckung 52a der Schlafeinheit 12a in dem Nutzungszustand der Schlafeinheit 12a.

Die Reisemobilvorrichtung 10a weist eine weitere Sanitäreinheit 58a auf (vgl. Fig. 2). Die weitere Sanitäreinheit 58a weist eine Toilette 60a auf. Die weitere Sanitäreinheit 58a weist ein Waschbecken 62a auf. Zu der Karosserierückwand 34a weist die weitere Sanitäreinheit 58a einen minimalen Abstand 64a von maximal 1950 mm, insbesondere von maximal 1940 mm, vorteilhaft von maximal 1930 mm und vorzugsweise von maximal 1920 mm auf. Im vorliegenden Ausführungsbeispiel weist die weitere Sanitäreinheit 58a einen minimalen Abstand 64a zu der Karosserierückwand 34a von im Wesentlichen 1915 mm auf. Dadurch kann insbesondere eine besonders kompakte Ausgestaltung erreicht werden.

Die weitere Sanitäreinheit 58a und die Sanitäreinheit 14a sind bezüglich einer Querrichtung 66a an einander gegenüberliegenden Wandbereichen der Karosserie 36a angeordnet. Die Querrichtung 66a ist im Wesentlichen senkrecht zu der Fahrtrichtung 50a ausgerichtet. Die Sanitäreinheit 14a weist von der Karosserierückwand 34a einen minimalen Abstand 54a von im Wesentlichen 1722 mm auf.

Die Schlafeinheit 12a und die Sanitäreinheit 14a und die weitere Sanitäreinheit 58a sind in dem Nutzungszustand der Schlafeinheit 12a ineinander verschachtelt angeordnet. Dadurch kann insbesondere eine geringe Fahrzeuglänge des Reisemobils erzielt werden.

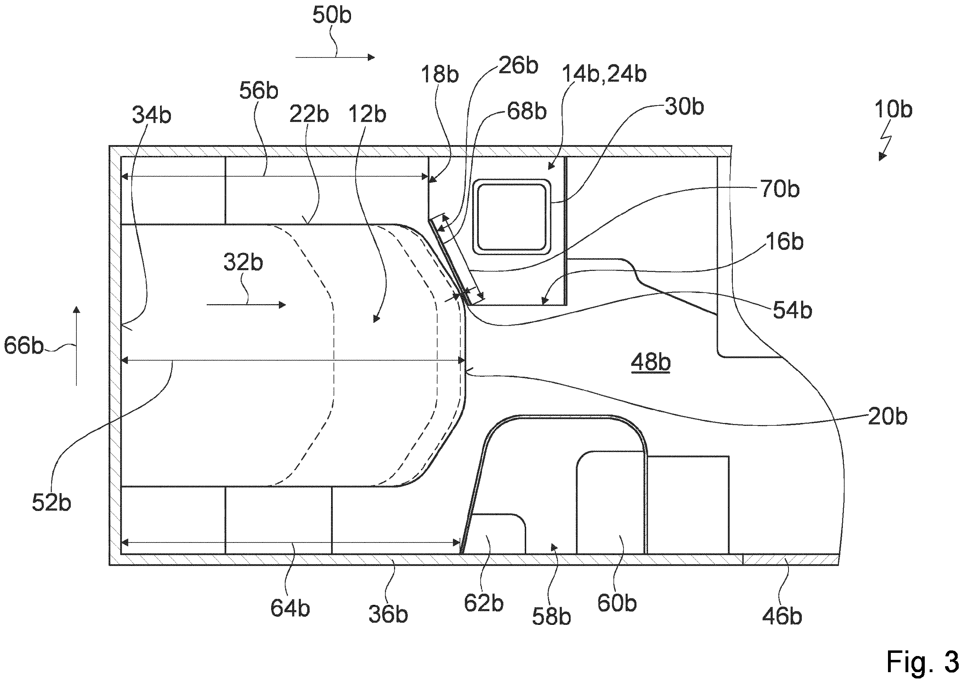

In Fig. 3 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 und 2 verwiesen werden kann. Zur Unterscheidung der Ausführungsbeispiele ist der Buchstabe a in den Bezugszeichen des Ausführungsbeispiels in den Fig. 1 und 2 durch den Buchstaben b in den Bezugszeichen des Ausführungsbeispiels der Fig. 3 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 und 2 verwiesen werden.

Fig. 3 zeigt einen Ausschnitt einer Reisemobilvorrichtung 10b eines alternativen Reisemobils 40b. Die Reisemobilvorrichtung 10b weist eine Schlafeinheit 12b und eine Sanitäreinheit 14b auf.

Ein erster Zugangsbereich 16b der Sanitäreinheit 14b und ein zweiter Zugangsbereich 18b der Sanitäreinheit 14b sind von einem Zwischenbereich 26b getrennt. Im vorliegenden Ausführungsbeispiel weist die Sanitäreinheit 14b ein Begrenzungselement 68b auf. Das Begrenzungselement 68b ist in dem Zwischenbereich 26b angeordnet. In einem Nutzungszustand der Sanitäreinheit 14b begrenzt das Begrenzungselement 68b die Sanitäreinheit 14b. Das Begrenzungselement 68b stellt in dem Nutzungszustand der Sanitäreinheit 14b einen Sichtschutz bereit.

Im vorliegenden Ausführungsbeispiel ist das Begrenzungselement 68b ein Vorhang. Das Begrenzungselement 68b ist von einem Lagerungszustand des Begrenzungselements 68b in einen Nutzungszustand des Begrenzungselements 68b und von dem Nutzungszustand des Begrenzungselements 68b in den Lagerungszustand des Begrenzungselements 68b überführbar. In dem Lagerungszustand des Begrenzungselements 68b ist das Begrenzungselement 68b im Wesentlichen vollständig in dem Zwischenbereich 26b angeordnet. In dem Nutzungszustand des Begrenzungselements 68b ist das Begrenzungselement 68b in dem Zwischenbereich 26b und in einem ersten Zugangsbereich 16b der Sanitäreinheit 14b und in einem zweiten Zugangsbereich 18b der Sanitäreinheit 14b angeordnet.

## Patentansprüche

1. Reisemobilvorrichtung mit zumindest einer Schlafeinheit (12a-b) und mit zumindest einer Sanitäreinheit (14a-b), welche zumindest einen ersten Zugangsbereich (16a-b) und zumindest einen zweiten Zugangsbereich (18a-b) aufweist, welche räumlich voneinander getrennt sind,
**dadurch gekennzeichnet, dass**
in wenigstens einem Nutzungszustand der Schlafeinheit (12a-b) der erste Zugangsbereich (16a-b) einen Zugang zu einer ersten Seite (20a-b) der Schlafeinheit (12a-b) und der zweite Zugangsbereich (18a-b) einen Zugang zu einer zweiten Seite (22a-b) der Schlafeinheit (12a-b) bereitstellt.

2. Reisemobilvorrichtung nach Anspruch 1,
**dadurch gekennzeichnet, dass**
der erste Zugangsbereich (16a-b) und der zweite Zugangsbereich (18a-b) in dem Nutzungszustand der Schlafeinheit (12a-b) Enden einer in der Sanitäreinheit (14a-b) angeordneten Durchgangspassage (24a-b) von der ersten Seite (20a-b) der Schlafeinheit (12a-b) zu der zweiten Seite (22a-b) der Schlafeinheit (12a-b) ausbilden.

3. Reisemobilvorrichtung nach Anspruch 1 oder 2,
**dadurch gekennzeichnet, dass**
der erste Zugangsbereich (16a-b) und der zweite Zugangsbereich (18a-b) einen minimalen Abstand (70a-b) von mindestens 100 mm aufweisen und von einem Zwischenbereich (26a-b) getrennt sind, welcher die Sanitäreinheit (14a-b) begrenzt.

4. Reisemobilvorrichtung nach Anspruch 3,
**dadurch gekennzeichnet, dass**
die Sanitäreinheit (14a) wenigstens eine Begrenzungswand (28a) aufweist, die in dem Zwischenbereich (26a) angeordnet ist.

5. Reisemobilvorrichtung nach einem der vorhergehenden Ansprüche,
**dadurch gekennzeichnet, dass**
die Schlafeinheit (12a-b) und die Sanitäreinheit (14a-b) in wenigstens einem Nutzungszustand der Schlafeinheit (12a-b) einen minimalen Abstand (54a-b) von maximal 200 mm aufweisen.

6. Reisemobilvorrichtung nach einem der vorhergehenden Ansprüche,
**dadurch gekennzeichnet, dass**
der erste Zugangsbereich (16a-b) und der zweite Zugangsbereich (18a-b) zumindest im Wesentlichen senkrecht zueinander angeordnet sind.

7. Reisemobilvorrichtung nach einem der vorhergehenden Ansprüche,
**dadurch gekennzeichnet, dass**
die Sanitäreinheit (14a-b) zumindest eine Dusche (30a-b) aufweist.

8. Reisemobilvorrichtung nach einem der vorhergehenden Ansprüche,
**dadurch gekennzeichnet, dass**
die Schlafeinheit (12a-b) von wenigstens einem Nutzungszustand der Schlafeinheit (12a-b) in wenigstens einem Lagerungszustand der Schlafeinheit (12a-b) und von dem Lagerungszustand der Schlafeinheit (12a-b) in den Nutzungszustand der Schlafeinheit (12a-b) überführbar ist, wobei die Schlafeinheit (12a-b) in dem Lagerungszustand der Schlafeinheit (12a-b) eine geringere Erstreckung entlang zumindest einer Richtung (32a-b) aufweist als in dem Nutzungszustand der Schlafeinheit (12a-b).

9. Reisemobilvorrichtung nach Anspruch 8,
**dadurch gekennzeichnet, dass**
die Richtung, (32a-b) entlang welcher die Schlafeinheit (12a-b) in dem Lagerungszustand der Schlafeinheit (12a-b) eine geringere Erstreckung aufweist als in dem Nutzungszustand der Schlafeinheit (12a-b), eine Längsrichtung der Schlafeinheit (12a-b) im dem Nutzungszustand der Schlafeinheit (12a-b) ist.

10. Reisemobilvorrichtung nach einem der vorhergehenden Ansprüche,
**gekennzeichnet durch**
zumindest eine Karosserierückwand (34a-b), von welcher die Sanitäreinheit (14a-b) einen minimalen Abstand (56a-b) von maximal 1750 mm aufweist.

11. Reisemobilvorrichtung nach einem der vorhergehenden Ansprüche,
**gekennzeichnet durch**
zumindest eine Karosserie (36a-b), welche eine Längserstreckung (38a-b) von maximal 7050 mm aufweist.

12. Reisemobil mit einer Reisemobilvorrichtung (10a-b) nach einem der vorhergehenden Ansprüche.

## Claims

1. Motorhome device with at least one sleeping unit (12a-b) and with at least one sanitary unit (14a-b) comprising at least one first access zone (16a-b) and at least one second access zone (18a-b), which are spatially separate from one another,
**characterised in that,** in at least one utilisation state of the sleeping unit (12a-b), the first access zone (16a-b) provides access to a first side (20a-b) of the sleeping unit (12a-b) and the second access zone (18a-b) provides access to a second side (22a-b) of the sleeping unit (12a-b).

2. Motorhome device according to claim 1,
**characterised in that,** in the utilisation state of the sleeping unit (12a-b), the first access zone (16a-b) and the second access zone (18a-b) form ends of a pass-through passage (24a-b), arranged in the sanitary unit (14a-b), from the first side (20a-b) of the sleeping unit (12a-b) to the second side (22a-b) of the sleeping unit (12a-b).

3. Motorhome device according to claim 1 or 2,
**characterised in that** the first access zone (16a-b) and the second access zone (18a-b) have a minimum distance (70a-b) of at least 100 mm and are separate from an intermediary zone (26a-b) that delimits the sanitary unit (14a-b).

4. Motorhome device according to claim 3,
**characterised in that** the sanitary unit (14a) comprises at least one limiting wall (28a), which is arranged in the intermediary zone (26a).

5. Motorhome device according to one of the preceding claims,
**characterised in that,** in at least one utilisation state of the sleeping unit (12a-b), the sleeping unit (12a-b) and the sanitary unit (14a-b) have a minimum distance (54a-b) of maximally 200 mm.

6. Motorhome device according to one of the preceding claims,
**characterised in that** the first access zone (16a-b) and the second access zone (18a-b) are arranged at least substantially perpendicularly to each other.

7. Motorhome device according to one of the preceding claims,
**characterised in that** the sanitary unit (14a-b) comprises at least a shower (30a-b).

8. Motorhome device according to one of the preceding claims,
**characterised in that** the sleeping unit (12a-b) is transferable from at least one utilisation state of the sleeping unit (12a-b) into at least one storage state of the sleeping unit (12a-b) and from the storage state of the sleeping unit (12a-b) into the utilisation state of the sleeping unit (12a-b),
the sleeping unit (12a-b) having a smaller extension along at least one direction (32a-b) in the storage state of the sleeping unit (12a-b) than in the utilisation state of the sleeping unit (12a-b).

9. Motorhome device according to claim 8,
**characterised in that** the direction (32a-b), along which the sleeping unit (12a-b) has a smaller extension in the storage state of the sleeping unit (12a-b) than in the utilisation state of the sleeping unit (12a-b), is a longitudinal direction of the sleeping unit (12a-b) in the utilisation state of the sleeping unit (12a-b).

10. Motorhome device according to one of the preceding claims,
**characterised by** at least one car body rear wall (34a-b), from which the sanitary unit (14a-b) has a minimum distance (56a-b) of maximally 1750 mm.

11. Motorhome device according to one of the preceding claims,
**characterised by** at least one car body (36a-b), which has a longitudinal extension (38a-b) of maximally 7050 mm.

12. Motorhome with a motorhome device (10a-b) according to one of the preceding claims.

## Revendications

1. Dispositif de camping-car, avec au moins une unité à coucher (12a-b) et avec au moins une unité sanitaire (14a-b) comprenant au moins une première zone d'accès (16a-b) et au moins une deuxième zone d'accès (18a-b), qui sont spatia-lement séparées l'une de l'autre,
**caractérisé en ce qu**', en au moins un état d'utilisation de l'unité à coucher (12a-b), la première zone d'accès (16a-b) offre un accès à un premier côté (20a-b) de l'unité à coucher (12a-b) et la deuxième zone d'accès (18a-b) offre un accès à un deuxième côté (22a-b) de l'unité à coucher (12a-b).

2. Dispositif de camping-car selon la revendication 1,
**caractérisé en ce que** la première zone d'accès (16a-b) et la deuxième zone d'accès (18a-b) forment, en l'état d'utilisation de l'unité à coucher (12a-b), des bouts d'un couloir-passage (24a-b) du premier côté (20a-b) de l'unité à coucher (12a-b) au deuxième côté (22a-b) de l'unité à coucher (12a-b), ledit couloir-passage (24a-b) étant agencé dans l'unité sanitaire (14a-b).

3. Dispositif de camping-car selon l'une quelconque des revendications 1 ou 2,
**caractérisé en ce que** la première zone d'accès (16a-b) et la deuxième zone d'accès (18a-b), ayant une distance minimale (70a-b) l'une de l'autre d'au moins 100 mm, sont séparées par une zone intermédiaire (26a-b), qui délimite l'unité sanitaire (14a-b).

4. Dispositif de camping-car selon la revendication 3,
**caractérisé en ce que** l'unité sanitaire (14a) comporte au moins une paroi limitante (28a) agencée dans la zone intermédiaire (26a).

5. Dispositif de camping-car selon l'une quelconque des revendications précédentes,
**caractérisé en ce que**, dans au moins un état d'utilisation de l'unité à coucher (12a-b), l'unité à coucher (12a-b) et l'unité sanitaire (14a-b) ont une distance minimale (54a-b) de maximalement 200 mm.

6. Dispositif de camping-car selon l'une quelconque des revendications précédentes,
**caractérisé en ce que** la première zone d'accès (16a-b) et la deuxième zone d'accès (18a-b) sont disposés au moins sensiblement perpendiculairement l'une à l'autre.

7. Dispositif de camping-car selon l'une quelconque des revendications précédentes,
**caractérisé en ce que** l'unité sanitaire (14a-b) comporte au moins une douche (30a-b).

8. Dispositif de camping-car selon l'une quelconque des revendications précédentes,
**caractérisé en ce que** l'unité à coucher (12a-b) est transférable d'au moins un état d'utilisation de l'unité à coucher (12a-b) dans au moins un état de rangement de l'unité à coucher (12a-b) et est transférable de l'état de rangement de l'unité à coucher (12a-b) dans l'état d'utilisation de l'unité à coucher (12a-b),
l'unité à coucher (12a-b) ayant dans au moins une direction (32a-b) une extension inférieure en état de rangement de l'unité à coucher (12a-b) à celle en état d'utilisation de l'unité à coucher (12a-b).

9. Dispositif de camping-car selon la revendication 8,
**caractérisé en ce que** la direction (32a-b), dans laquelle l'unité à coucher (12a-b) comporte une extension inférieure à celle en état d'utilisation de l'unité à coucher (12a-b), est une direction longitudinale de l'unité à coucher (12a-b) en l'état d'utilisation de l'unité à coucher (12a-b).

10. Dispositif de camping-car selon l'une quelconque des revendications précédentes,
**caractérisé par** au moins une paroi arrière de carrosserie (34a-b), l'unité sanitaire (14a-b) comportant une distance minimale (56a-b) de ladite paroi arrière de carrosserie (34a-b) de maximalement 1750 mm.

11. Dispositif de camping-car selon l'une quelconque des revendications précédentes,
**caractérisé par** au moins une carrosserie (36a-b) ayant une extension longitudinale (38a-b) de maximalement 7050 mm.

12. Camping-car avec un dispositif de camping-car (10a-b) selon l'une quelconque des revendications précédentes.
